# EUROPEAN PATENT SPECIFICATION

(11) **EP 4 386 166 B1**
(45) Date of publication and mention of the grant of the patent: **11.06.2025**
(21) Application number: 22214388.5
(22) Date of filing: 16.12.2022
(51) Int. Cl.: E05F 15/603, B60K 15/05, B60L 53/16

(54) **CHARGE PORT DOOR ASSEMBLY FOR AN ELECTRICALLY PROPELLED VEHICLE**
LADEANSCHLUSSTÜRANORDNUNG FÜR EIN ELEKTRISCH ANGETRIEBENES FAHRZEUG
ENSEMBLE PORTE D'ORIFICE DE CHARGE POUR VÉHICULE À PROPULSION ÉLECTRIQUE

(43) Date of publication of application: 19.06.2024
(73) Proprietor: MINEBEA ACCESSSOLUTIONS ITALIA S.P.A., 10044 Pianezza (IT)
(72) Inventor: FRATTINI, Massimo, 10044 Pianezza (IT); GRAMAGLIA, Alberto, 10044 Pianezza (IT)
(74) Representative: Germain Maureau

(56) References cited:
- DE-A1- 102019 100 787
- US-A1- 2022 213 728

## Description

### Field of the invention

The present invention relates generally to vehicles and, more particularly, to the charge port of an electric vehicle or of a plug-in hybrid electric vehicle.

### Background of the invention

Electric vehicles and hybrid electric vehicles often have an electric charge port for charging an electric battery with an external power source. The charge port is typically externally mounted, thereby allowing easy access as well as the possibility to lock the passenger compartment while the vehicle is being charged. A charge port door, or charge port flap, usually covers the charge port and must be opened to access the charge port to charge the battery. DE 10 2019 100787 A1 and US 2022/213728 A1 disclose a charge port for electric vehicle.

The opening and closing of the charge port door may be fully automated by the means of a mechanism assembly comprising one or more electric actuators. The mechanism is configured to transform the movement of the actuator by means of different linkages, among which arms or levers. The kinematic of the actuation mechanism may be configured to multiply the movement generated by the actuator. When an intense force is applied on the charge port door, for instance by an ill-intentioned person, the force exerted on the door is, due to the kinematic of the mechanism, multiplied towards the actuator. Therefore an intense force exerted on the charge port door can break the actuator. Such a situation must of course being avoided as much as possible.

### Summary of the invention

An object of the invention is to provide a charge port door assembly equipped with an actuation system for automatically opening and/or closing the charge port door, the actuation system being configured to safe the actuator when a high intensity force is exerted on the door, for example in case of a break-in attempt.

To this end, the invention relates to a charge port door assembly for a vehicle, comprising:
- a charge port door;
- an actuation system, configured to move the charge port door between a closed position, in which the door is intended to cover a charge port of a vehicle and to remain flush with an outer surface of the vehicle, and an open position, in which the door is intended to permit access to the charge port, the actuation system comprising a linkage connecting the door to a support intended to be fixed relative to the vehicle, and an actuator configured to actuate the linkage to move the door,
- the actuation system further comprising an extendable lever, the extendable lever being directly or indirectly connected at a first end to an output member of the actuator, and directly or indirectly connected at an opposite, second end to the door.

Thus, the charge port door assembly is protected against breakage and damage of the actuation system: thanks to the extendable lever, the actuation system is able to withstand the loads that are transmitted to the actuation system when a very intense force is exerted on the door, for example during a break-in attempt. In such a case, the extendable lever moves to an extended configuration, thereby letting the door move from its closed position towards its open position without inducing excessive loads on the actuation system, and in particular on the actuator. The extendable lever according to the invention therefore provides a safety feature that prevents breakage of the actuation system, and in particular of the actuator, in case a very intense force is exerted in the door, for example during a break-in attempt.

According to the invention, the extendable lever comprises a first member fixedly connected to the first end or to the second end of the extendable lever, and a second member fixedly connected to the opposite end of the extendable lever, the first member and the second member being configured to move away from each other when a force is exerted on the extendable lever, the force exerted tending to separate both ends of the extendable lever and having an intensity higher than a specified intensity, the specified intensity being lower than the intensity of a force likely to damage the actuation system .

According to the invention, the specified intensity is higher than a maximum intensity of the force exerted on the extendable lever during normal operation of the actuation system. The charge port door assembly may comprise the following features, considered either alone or in any technically possible combination within the scope of the appended claims.

The first member and the second member are releasably coupled via a snap-fit connection.

The first member comprises a hollow-shaped portion configured to receive a post protruding from the second member, the post having a connecting end configured to be releasably coupled to an interlocking portion of the first member via a snap-fit connection.

The connecting end of the post has a split portion defining two flexible elements, each of the flexible elements bearing a first ramp and a second ramp, the ramps of each flexible element being configured to allow a snap-fit connection with corresponding first ramps and second ramps of the interlocking portion of the first member.

The hollow-shaped portion and the post are configured to allow at least a part of the post, for example at least the connecting end, remaining within the hollow-shaped portion when the extendable lever is in a maximum extension configuration.

A length of the portion of the post which is housed within the first member when the first member and the second member are coupled together is higher than a maximum length of the relative displacement between the two members when the connection between the first and second members is released and the extendable lever moves from an unextended configuration to a maximum extension configuration.

The first member comprises a hollow-shaped part, and the second member comprises a hollow-shaped part configured to slideably receive the hollow-shaped part of the first member, the first and second members being configured to receive within the enclosure delimited by the two hollow-shaped parts an elastic biasing device, the elastic biasing device being configured to bias the two members towards each other.

The first member and the second member each comprise a hollow-shaped part which is tube-shaped, the hollow-shaped part of the second member having an inner diameter which is greater than an outer diameter of the hollow-shaped part of the first member.

The hollow-shaped parts have a length allowing the elastic biasing device to remain entirely housed within the enclosure delimited by the hollow-shaped parts when the extendable lever is in a maximum extension configuration.

The elastic biasing device is a spring, for example a coil extension spring.

The spring rate of the spring is such that the maximum extension of the extendable lever is obtained when the spring is subjected to a force, the intensity of which is lower than the intensity of a force likely to damage the actuation system.

The actuator is an electric rotary actuator.

The linkage includes a first lever and a second lever, each of the first and second levers being hinged at one end to the support and being hinged at an opposite end to the door, the first and second levers being configured as a parallelogram mechanism.

The extendable lever is rotatably coupled to the first lever at the first end and is rotatably coupled at the second end to a first actuation lever, the first actuation lever being fixedly coupled to the output member of the actuator.

The invention also relates to a vehicle comprising a charge port mounted on a support and a charge port door assembly as disclosed above.

### Brief description of the drawings

Figure 1 illustrates a vehicle equipped with a charge port door assembly according to the invention, the door being closed.
Figure 2 illustrates a charge port door assembly according to a first embodiment of the invention, the door being in the closed position.
Figure 3 illustrates the charge port door assembly of Figure 2, the door being in the open position.
Figure 4 is a detailed view of the extendable lever of Figure 2.
Figure 5 illustrates the extendable lever of Figure 4, the components of which being disassembled.
Figure 6 is a detailed view of a part of the extendable lever of Figure 4.
Figure 7 illustrates the extendable lever of Figure 4 in an extended configuration.
Figure 8 illustrates a charge port door assembly according to a second embodiment of the invention, wherein the extendable lever includes an elastic biasing device.
Figure 9 illustrates the extendable lever of Figure 8.
Figure 10 illustrates the extendable lever of Figure 8, the components of which being disassembled.
Figure 11 illustrates the extendable lever of Figure 8, in an extended configuration.

### Detailed description of embodiments

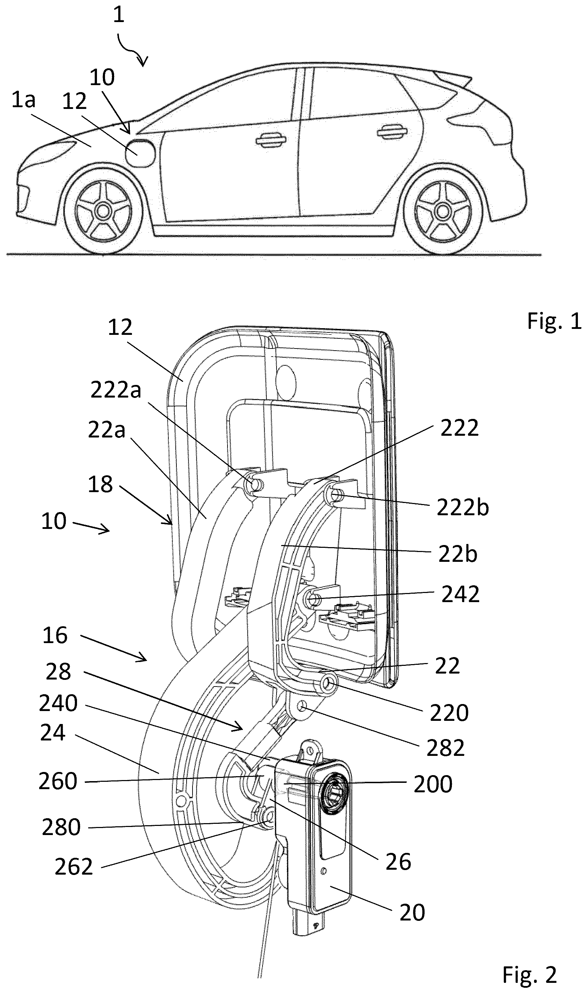

Figure 1 illustrates a vehicle 1 having at least one electric propulsion motor, such as an electric vehicle or a plug-in hybrid electric vehicle. The vehicle is equipped with a charge port (not shown) configured to be connected to a charge plug when the car needs to be charged. The vehicle 1 is also equipped with a charge port door assembly 10 according to the invention, in order to cover and protect the charge port when the latter is not in use.

Figures 2 to 7 illustrate a first embodiment of a charge port door assembly according to the invention.

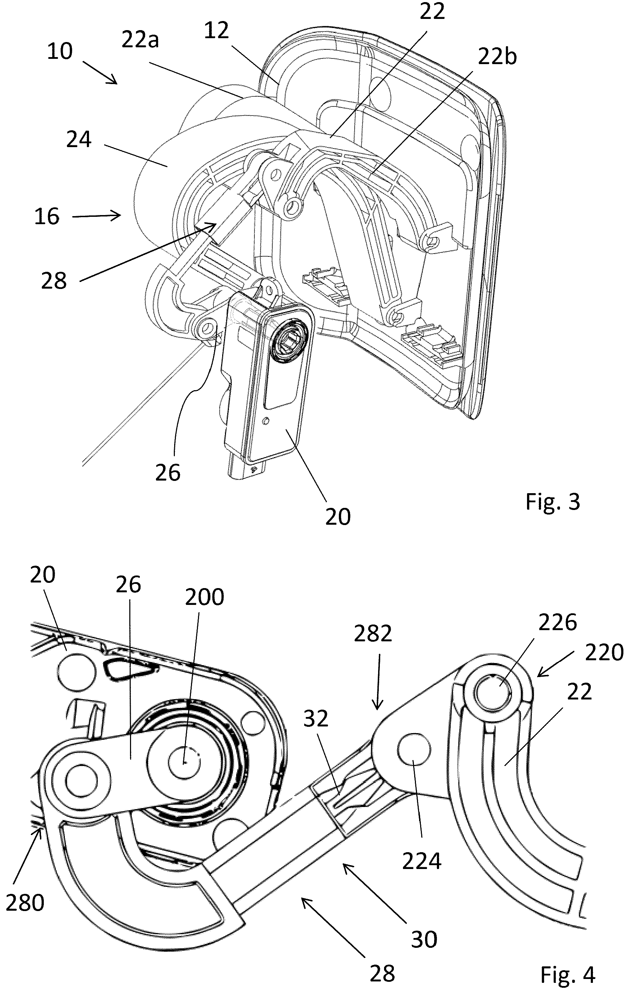

The charge port door assembly 10 comprises a door 12 moveable between a closed position (shown in Figures 1 and 2), in which the door blocks access to the charge port, and an open position (shown in Figure 3), in which the door permits access to the charge port.

The charge port door assembly 10 is mounted onto a charge port support (not shown) which is fixed relative to the vehicle 1. In its closed position, the door 12 is flush with an outer surface of an exterior panel 1a of the vehicle 1, for example a front fender 1a as shown in Figure 1. In its open position, the door 12 uncovers an opening in the panel 1a, thereby allowing access to the charge port.

The door 12 is attached to the support by means of an actuation system 16. The actuation system 16 is configured for automatically moving the door from its closed position to its open position and inversely. To this end, the actuation system 16 includes a linkage 18 and an actuator 20. The actuator 20 is fixed relative to the support of the charge port and is for example an electric rotary actuator.

The linkage 18 connects the door 12 to the support. The linkage 18 includes a lever parallelogram. More particularly, the linkage 18 includes a first lever 22 and a second lever 24. The first lever 22 is hinged at one end 220 to the support and is hinged at an opposite end 222 to the door 12. In the embodiment of Figures 2 and 3, the first lever 22 comprises two connecting arms 22a, 22b, each of the connecting arms having an end 222a, 222b hinged to the door 12. The second lever 24 is hinged at one end 240 to the support and is hinged at an opposite end 242 to the door 12. The first lever 22 and the second lever 24 are thus configured as a parallelogram mechanism (or parallelogram four-bar linkage), which allows maintaining a constant orientation of the door 12 during its motion. It will however being understood that the actuation system could be configured to achieve a different kind of movement for the door without departing from the scope of the invention as defined in the appended claims.

The linkage 18 comprises a first actuation lever 26 and a second actuation lever 28. The first actuation lever 26 is fixedly coupled, at a first end 260, to a rotating output shaft 200 of the actuator 20, and is rotatably coupled, at an opposite, second end 262, to the second actuation lever 28. The second actuation lever 28 is therefore rotatably coupled, at a first end 280, to the first actuation lever 26, and is rotatably coupled, at an opposite, second end 282, to the first lever 22. The second actuation lever 28 is connected to the first lever 22 at a pivot point 224, which is distinct of the pivot point 226 between the first lever 22 and the support. The linkage 18 is thus configured to transmit the rotational movement of the output shaft 200 of the actuator 20 to the first lever 22, via the first actuation lever 26 and the second actuation lever 28.

According to the invention, the second actuation lever 28 is an extendable lever. More particularly, the second actuation lever 28 is configured to extend upon application of a force tending to stretch this lever, the force having an intensity higher than a specified intensity (or specified threshold), in particular when the actuator 20 is not energized. The second actuation lever 28 is configured not to extend (or to extend very slightly) when it is subjected only to forces and loads generated during normal actuation of the charge port door assembly (that is, when the actuator is energized). The value of the above mentioned specified intensity is under the intensity of a force likely to damage or break the actuation system, and in particular the actuator 20.

In the embodiment of Figures 2 to 7, the second actuation lever 28, or extendable lever 28, comprises a first member 30 which is linked (being rotatably coupled) to the first lever 22, and a second member 32 which is linked (being rotatably coupled) to the first actuation lever 26. The first member 30 is configured to receive and hold the second member 32 as long as a force tending to pull apart the two members does not exceed the aforementioned specified threshold, the specified threshold being defined to avoid breakage or damage of the actuator system, and in particular of the actuator 20. If such a force exceeds the specified threshold, the first member 30 and the second member 32 can be separated, thereby allowing an increase of the distance between the two members, and therefore a displacement of the door 12 relative to the first actuation lever 26 whereas the actuator is not energized. Allowing such a displacement of the door 12 avoids any breakage of the actuator 20. Of course, the specified threshold value is defined to avoid any separation or relative movement of the two members 30, 32 during normal actuation of the system.

The extendable lever is shown more in detail in Figures 4 to 7. The first member 30 comprises a hollow-shaped portion 300 (for instance a tube-shaped portion), configured to receive a protruding post 320 of the second member 32. The first member 30 also includes an interlocking portion 302 configured to be releasably coupled to a connecting end 322 of the post 320 via a snap-fit connection.

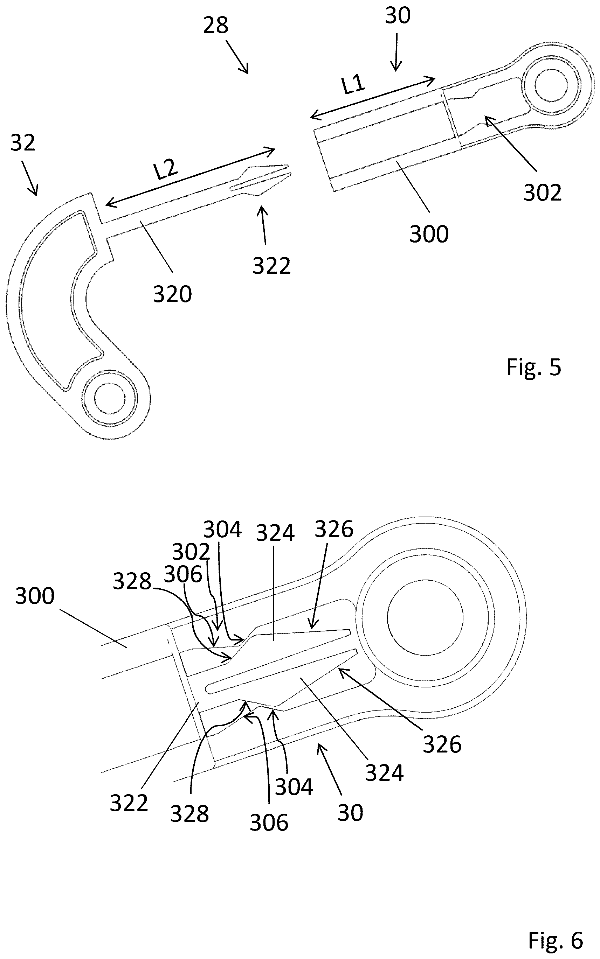

As shown in Figure 6, the connecting end 322 of the post 320 has a split portion defining two symmetrical, flexible elements 324. Each of the flexible elements 324 bears a first ramp 326 and a second ramp 328 configured to allow a snap-fit connection with corresponding first ramps 304 and second ramps 306 of the interlocking portion 302 of the first member 30. The interlocking portion 302 comprises two opposite parts configured to sandwich the connecting end 322 of the post 320, a pair of a first ramp 304 and a second ramp 306 being located on each of the two parts.

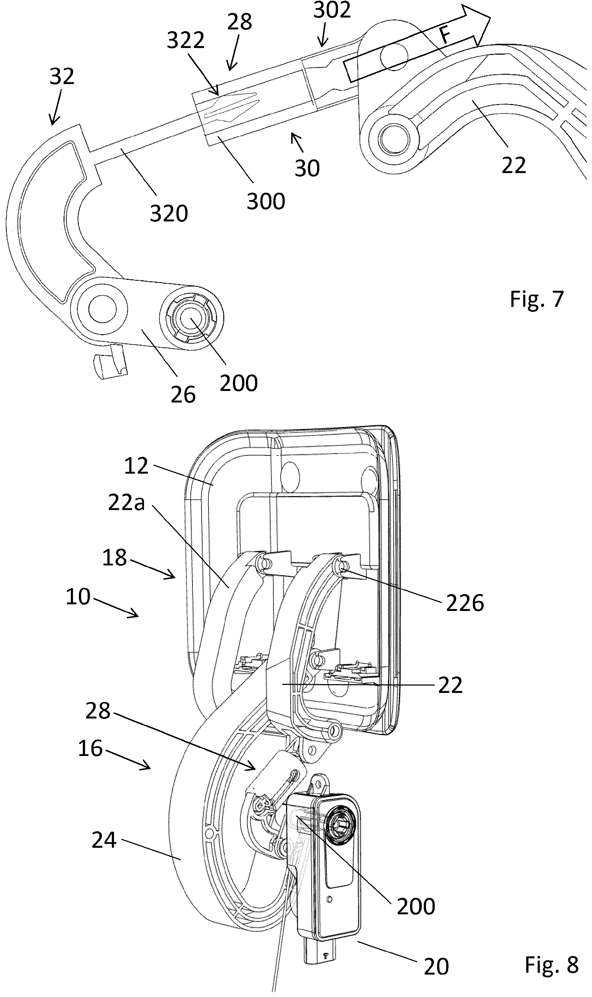

As shown in Figure 7, when a force F tending to pull apart the first end and the second end of the second actuation lever 28 is applied to the extendable lever 28, the force F being higher than the aforementioned specified threshold, the snap-fit connection between the interlocking portion 302 and the connecting end 322 of the post 320 is released, thereby letting the first member 30 and second member 32 being separated. The separation of the first and second members 30, 32 thereby avoids breakage of the actuation system, and in particular of the actuator 20.

As the connection between the first member 30 and the second member is a snap-fit connection, if a release of the connection occurs, the extendable lever 28 can be put back in is normal operation state by reconnecting the first and second members 30, 32. In an embodiment, the length L1 of the hollow-shaped portion 300 of the first member 30 and the length L2 of the post 320 of the second member 32 are such that, when the extendable lever 28 is in the maximum extension configuration as shown in Figure 7, at least a part of the post 320 (for example at least the connecting end 322) remains within the hollow-shaped portion 300. More particularly, a length of the portion of the post 320 which is housed within the first member 30 when the first member 30 and the second member 32 are coupled together is lower than a maximum length of the relative displacement between the two members 30, 32 when the connection between the first and second members is released and the extendable lever moves from an unextended configuration to a maximum extension configuration. Thanks to this configuration, the first and second members can be connected back together simply by pushing on the door 12 so as to bring the two members 30, 32 closer to each other until the snap-fit connection is restored. This can therefore be easily performed by a user without assistance of a professional.

The extendable lever 28 according to the invention therefore provides a safety feature that prevents breaking of the actuation system, and in particular of the actuator 20, in case a very intense force is exerted in the door 12, for example during a break-in attempt.

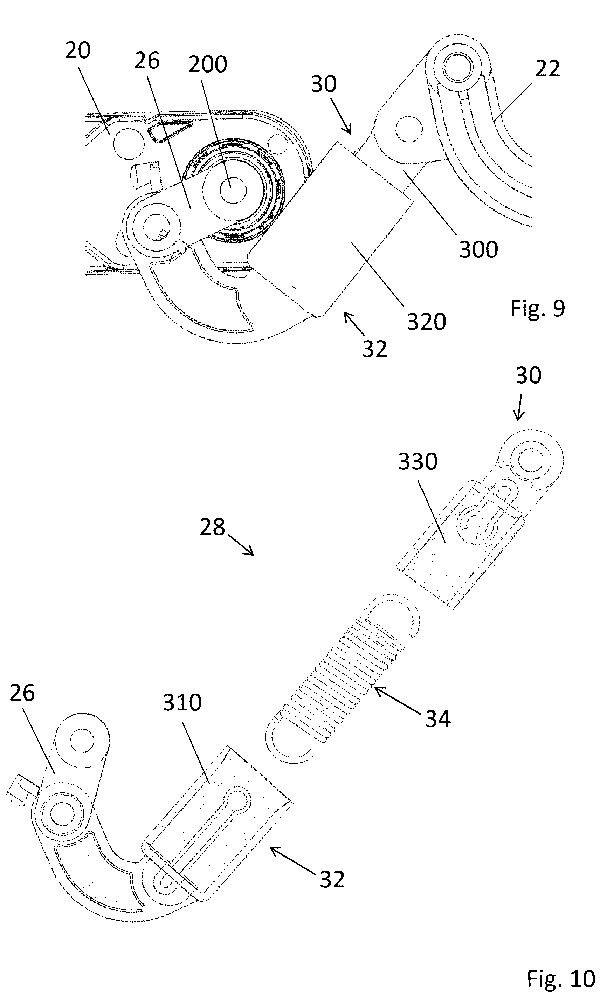

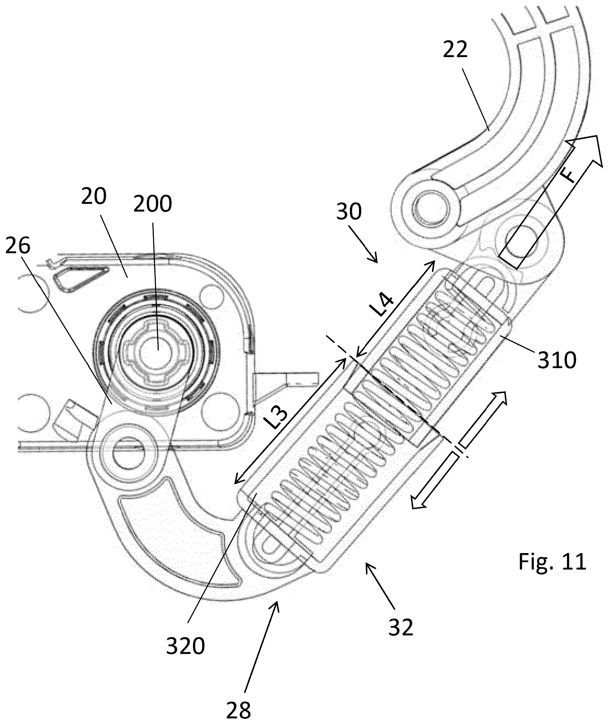

Figures 8 to 11 illustrate another embodiment of a charge port door assembly 10 according to the invention. As for the embodiment disclosed above, the actuation system 16 comprises an extendable lever 28 comprising a first member 30 and a second member 32. Each of the first and second members 30, 32 comprises a hollow-shaped part 310, 330, for example a tube-shaped part, as shown in Figures 7 to 11. One of the two hollow-shaped parts 330 is configured to slideably receive the other hollow-shaped part 310. In the embodiment of Figures 7 to 11, the first member 30 is received within the second member 32. To this end, the hollow-shaped part 330 of the second member 32 has an inner diameter that is higher than the outer diameter of the hollow-shaped part 310 of the first member 30. The two members 30, 32 are configured to receive within the enclosure delimited by the two hollow-shaped parts 310, 330 an elastic biasing device 34, such as a spring 34 and, in particular, a coil extension spring 34 as shown in Figures 7 to 11. The elastic biasing device 34 is configured to bias the two members 30, 32 towards each other. The elastic biasing device is for instance a spring 34, which is connected at one end to the first member 30 and, at an opposite end, to the second member 32. Thus, when a force F higher than the aforementioned specified threshold, the force tending to pull apart the two ends of the extendable lever, is applied to the extendable lever 28, as shown in Figure 9, the spring 34 extends, thereby allowing the two members 30, 32 to move apart from each other, while remaining connected together by the spring. In an embodiment, the lengths L3 and L4 of the hollow-shaped parts 310, 330 of the first and second members are such that, when the extendable lever is in the maximum extension configuration, the spring 34 remains entirely housed within the assembly of the two hollow-shaped parts 310, 330. As shown in Figure 11, this result can be obtained by providing lengths L3 and L4 such that the hollow-shaped part 310 of the first member 30 still remain housed within the hollow-shaped portion 330 of the second member 32 when the spring is in its maximum extension configuration. When the force F is no longer exerted, the spring 34 biases the first and second members 30, 32 towards each other. The spring 34 thus allows the extendable lever 28 getting back to its initial, unextended configuration without human intervention.

## Claims

1. A charge port door assembly (10) for a vehicle (1), comprising:
- a charge port door (12);
- an actuation system (16),configured to move the charge port door (12) between a closed position, in which the door (12) is intended to cover a charge port of a vehicle (1) and to remain flush with an outer surface of the vehicle (1), and an open position, in which the door is intended to permit access to the charge port, the actuation system (16) comprising a linkage (18) connecting the door (12) to a support intended to be fixed relative to the vehicle (1), and an actuator (20) configured to actuate the linkage (18) to move the door (12),
the actuation system (16) further comprising an extendable lever (28), the extendable lever (28) being directly or indirectly connected at a first end (280) to an output member (200) of the actuator, and directly or indirectly connected at an opposite, second end (282) to the door (12),
the charge port assembly (10) being **characterized in that** the extendable lever (28) comprises a first member (30) fixedly connected to the first end (280) or to the second end (282) of the extendable lever (28), and a second member (32) fixedly connected to the opposite end (282) of the extendable lever (28), the first member (30) and the second member (32) being configured to move away from each other when a force is exerted on the extendable lever (28), the force exerted tending to separate both ends (280, 282) of the extendable lever (28) and having an intensity higher than a specified intensity, the specified intensity being lower than the intensity of a force likely to damage the actuation system (16).

2. The charge port door assembly (10) according to claim 1, wherein the first member (30) and the second member (32) are releasably coupled via a snap-fit connection.

3. The charge port door assembly (10) according to claim 2, wherein the first member (30) comprises a hollow-shaped portion (300) configured to receive a post (320) protruding from the second member (320), the post (320) having a connecting end (322) configured to be releasably coupled to an interlocking portion (302) of the first member (30) via a snap-fit connection.

4. The charge port door assembly (10) according to claim 3, wherein the connecting end (322) of the post (320) has a split portion defining two flexible elements (324), each of the flexible elements (324) bearing a first ramp (326) and a second ramp (328), the ramps (326, 328) of each flexible elements (324) being configured to allow a snap-fit connection with corresponding first ramps (304) and second ramps (306) of the interlocking portion (302) of the first member (30).

5. The charge port door assembly (10) according to claim 3 or 4, wherein the hollow-shaped portion (300) and the post (320) are configured to allow at least a part of the post (320), for example at least the connecting end (322), remaining within the hollow-shaped portion (300) when the extendable lever (28) is in a maximum extension configuration.

6. The charge port door assembly (10) according to claim 5, wherein a length (L2) of the portion of the post (320) which is housed within the first member (30) when the first member (30) and the second member (32) are coupled together is higher than a maximum length of the relative displacement between the two members (30, 32) when the connection between the first and second members (30, 32) is released and the extendable lever (28) moves from an unextended configuration to a maximum extension configuration.

7. The charge port door assembly (10) according to claim 1, wherein the first member (30) comprises a hollow-shaped part (310), and the second member (32) comprises a hollow-shaped part (330) configured to slideably receive the hollow-shaped part (310) of the first member (30), the first and second members (30, 32) being configured to receive within the enclosure delimited by the two hollow-shaped parts (310, 330) an elastic biasing device (34), the elastic biasing device (34) being configured to bias the two members (30, 32) towards each other.

8. The charge port door assembly (10) according to claim 7, wherein the first member (30) and the second member each comprise a hollow-shaped part (310, 330) which is tube-shaped, the hollow-shaped part (330) of the second member (32) having an inner diameter which is greater than an outer diameter of the hollow-shaped part (310) of the first member (30).

9. The charge port door assembly (10) according to claim 7 or 8, wherein the hollow-shaped parts (310, 330) have a length allowing the elastic biasing device (34) to remain entirely housed within the enclosure delimited by the hollow-shaped parts (310, 330) when the extendable lever (28) is in a maximum extension configuration.

10. The charge port door assembly (10) according to anyone of claims 7 to 9, wherein the elastic biasing device (34) is a spring, for example a coil extension spring (34).

11. The charge port door assembly (10) according to claim 10, wherein the spring rate of the spring (34) is such that the maximum extension of the extendable lever (28) is obtained when the spring (34) is subjected to a force, the intensity of which is lower than the intensity of a force likely to damage the actuation system (16).

12. The charge port door assembly (10) according to anyone of the preceding claims, wherein the actuator (20) is an electric rotary actuator.

13. The charge port door assembly (10) according to anyone of the preceding claims, wherein the linkage (18) includes a first lever (22) and a second lever (24), each of the first and second levers being hinged at one end (220, 240) to the support and being hinged at an opposite end (222, 242) to the door (12), the first and second levers (22, 24) being configured as a parallelogram mechanism.

14. The charge port assembly (10) according to claim 13, wherein the extendable lever (28) is rotatably coupled to the first lever (22) at the first end (280) and is rotatably coupled at the second end (282) to a first actuation lever (26), the first actuation lever (26) being fixedly coupled to the output member (200) of the actuator (20).

15. A vehicle (1) comprising a charge port mounted on a support and a charge port door assembly (10) according to anyone of the preceding claims.

## Patentansprüche

1. Ladeanschlussklappenbaugruppe (10) für ein Fahrzeug (1), die Folgendes umfasst:
- eine Ladeanschlussklappe (12);
- ein Betätigungssystem (16), das dazu eingerichtet ist, die Ladeanschlussklappe (12) zwischen einer geschlossenen Position, in der die Klappe (12) einen Ladeanschluss eines Fahrzeugs (1) abdecken und bündig mit einer Außenfläche des Fahrzeugs (1) bleiben soll, und einer geöffneten Position, in der die Klappe den Zugang zum Ladeanschluss ermöglichen soll, zu bewegen, wobei das Betätigungssystem (16) ein Gestänge (18), das die Klappe (12) mit einem Träger verbindet, die relativ zum Fahrzeug (1) befestigt werden soll, und einen Aktuator (20) umfasst, der dazu eingerichtet ist, das Gestänge (18) zum Bewegen der Klappe (12) zu betätigen,
wobei das Betätigungssystem (16) ferner einen ausziehbaren Hebel (28) umfasst, wobei der ausziehbare Hebel (28) an einem ersten Ende (280) direkt oder indirekt mit einem Ausgangselement (200) des Aktuators verbunden ist und an einem gegenüberliegenden zweiten Ende (282) direkt oder indirekt mit der Klappe (12) verbunden ist,
wobei die Ladeanschlussklappenbaugruppe (10) **dadurch gekennzeichnet ist, dass** der ausziehbare Hebel (28) ein erstes Element (30), das fest mit dem ersten Ende (280) oder mit dem zweiten Ende (282) des ausziehbaren Hebels (28) verbunden ist, und ein zweites Element (32) umfasst, das fest mit dem gegenüberliegenden Ende (282) des ausziehbaren Hebels (28) verbunden ist, wobei das erste Element (30) und das zweite Element (32) dazu eingerichtet sind, sich voneinander wegzubewegen, wenn eine Kraft auf den ausziehbaren Hebel (28) ausgeübt wird, wobei die ausgeübte Kraft dazu neigt, beide Enden (280, 282) des ausziehbaren Hebels (28) zu trennen, und eine Intensität aufweist, die höher ist als eine festgelegte Intensität, wobei die festgelegte Intensität geringer ist als die Intensität einer Kraft, die das Betätigungssystem (16) beschädigen könnte.

2. Ladeanschlussklappenbaugruppe (10) nach Anspruch 1, wobei das erste Element (30) und das zweite Element (32) über eine Schnappverbindung lösbar gekoppelt sind.

3. Ladeanschlussklappenbaugruppe (10) nach Anspruch 2, wobei das erste Element (30) einen hohlförmigen Abschnitt (300) umfasst, der dazu eingerichtet ist, eine Stange (320) aufzunehmen, die aus dem zweiten Element (320) hervorsteht, wobei die Stange (320) ein Verbindungsende (322) aufweist, das dazu eingerichtet ist, über eine Schnappverbindung lösbar mit einem Verriegelungsabschnitt (302) des ersten Elements (30) gekoppelt zu werden.

4. Ladeanschlussklappenbaugruppe (10) nach Anspruch 3, wobei das Verbindungsende (322) der Stange (320) einen geteilten Abschnitt aufweist, der zwei flexible Elemente (324) definiert, wobei jedes der flexiblen Elemente (324) eine erste Rampe (326) und eine zweite Rampe (328) trägt, wobei die Rampen (326, 328) jedes flexiblen Elements (324) dazu eingerichtet sind, eine Schnappverbindung mit entsprechenden ersten Rampen (304) und zweiten Rampen (306) des Verriegelungsabschnitts (302) des ersten Elements (30) zu ermöglichen.

5. Ladeanschlussklappenbaugruppe (10) nach Anspruch 3 oder 4, wobei der hohlförmige Abschnitt (300) und die Stange (320) dazu eingerichtet sind, mindestens einem Teil der Stange (320), zum Beispiel mindestens dem Verbindungsende (322), zu ermöglichen, innerhalb des hohlförmigen Abschnitts (300) zu verbleiben, wenn sich der ausziehbare Hebel (28) in einer maximalen Auszugskonfiguration befindet.

6. Ladeanschlussklappenbaugruppe (10) nach Anspruch 5, wobei eine Länge (L2) des Abschnitts der Stange (320), der innerhalb des ersten Elements (30) untergebracht ist, wenn das erste Element (30) und das zweite Element (32) miteinander gekoppelt sind, größer ist als eine maximale Länge der relativen Verschiebung zwischen den beiden Elementen (30, 32), wenn die Verbindung zwischen dem ersten und dem zweiten Element (30, 32) gelöst wird und der ausziehbare Hebel (28) sich von einer nicht ausgezogenen Konfiguration in eine maximale Auszugskonfiguration bewegt.

7. Ladeanschlussklappenbaugruppe (10) nach Anspruch 1, wobei das erste Element (30) ein hohlförmiges Teil (310) umfasst und das zweite Element (32) ein hohlförmiges Teil (330) umfasst, das dazu eingerichtet ist, das hohlförmige Teil (310) des ersten Elements (30) gleitend aufzunehmen, wobei das erste und das zweite Element (30, 32) dazu eingerichtet sind, innerhalb des durch die beiden hohlförmigen Teile (310, 330) begrenzten Gehäuses eine elastische Vorspannungsvorrichtung (34) aufzunehmen, wobei die elastische Vorspannungsvorrichtung (34) dazu eingerichtet ist, die beiden Elemente (30, 32) zueinander hin vorzuspannen.

8. Ladeanschlussklappenbaugruppe (10) nach Anspruch 7, wobei das erste Element (30) und das zweite Element jeweils ein hohlförmiges Teil (310, 330) umfassen, das rohrförmig ist, wobei das hohlförmige Teil (330) des zweiten Elements (32) einen Innendurchmesser aufweist, der größer ist als ein Außendurchmesser des hohlförmigen Teils (310) des ersten Elements (30).

9. Ladeanschlussklappenbaugruppe (10) nach Anspruch 7 oder 8, wobei die hohlförmigen Teile (310, 330) eine Länge aufweisen, die es der elastischen Vorspannungsvorrichtung (34) ermöglichen, vollständig innerhalb des durch die hohlförmigen Teile (310, 330) begrenzten Gehäuses untergebracht zu verbleiben, wenn sich der ausziehbare Hebel (28) in einer maximalen Auszugskonfiguration befindet.

10. Ladeanschlussklappenbaugruppe (10) nach einem der Ansprüche 7 bis 9, wobei die elastische Vorspannungsvorrichtung (34) eine Feder, zum Beispiel eine Spiralzugfeder (34), ist.

11. Ladeanschlussklappenbaugruppe (10) nach Anspruch 10, wobei die Federrate der Feder (34) derart ist, dass der maximale Auszug des ausziehbaren Hebels (28) erreicht wird, wenn die Feder (34) einer Kraft ausgesetzt ist, deren Intensität geringer ist als die Intensität einer Kraft, die das Betätigungssystem (16) beschädigen könnte.

12. Ladeanschlussklappenbaugruppe (10) nach einem der vorhergehenden Ansprüche, wobei der Aktuator (20) ein elektrischer Drehaktuator ist.

13. Ladeanschlussklappenbaugruppe (10) nach einem der vorhergehenden Ansprüche, wobei das Gestänge (18) einen ersten Hebel (22) und einen zweiten Hebel (24) enthält, wobei jeweils der erste und der zweite Hebel an einem Ende (220, 240) an dem Träger angelenkt ist und an einem gegenüberliegenden Ende (222, 242) der Klappe (12) angelenkt ist, wobei der erste und der zweite Hebel (22, 24) als Parallelogrammmechanismus eingerichtet sind.

14. Ladeanschlussbaugruppe (10) nach Anspruch 13, wobei der ausziehbare Hebel (28) am ersten Ende (280) drehbar mit dem ersten Hebel (22) gekoppelt ist und am zweiten Ende (282) drehbar mit einem ersten Betätigungshebel (26) gekoppelt ist, wobei der erste Betätigungshebel (26) fest mit dem Ausgangselement (200) des Aktuators (20) gekoppelt ist.

15. Fahrzeug (1), das einen Ladeanschluss, der auf einem Träger montiert ist, und eine Ladeanschlussklappenbaugruppe (10) nach einem der vorhergehenden Ansprüche umfasst.

## Revendications

1. Ensemble trappe de prise de recharge (10) pour un véhicule (1), comprenant :
- une trappe de prise de recharge (12) ;
- un système d'actionnement (16), configuré pour déplacer la trappe de prise de recharge (12) entre une position fermée, dans laquelle la trappe (12) est destinée à couvrir une prise de recharge d'un véhicule (1) et à rester au même niveau qu'une surface externe du véhicule (1), et une position ouverte, dans laquelle la trappe est destinée à permettre l'accès à la prise de recharge, le système d'actionnement (16) comprenant une tringlerie (18) reliant la trappe (12) à un support destiné à être fixe par rapport au véhicule (1), et un actionneur (20) configuré pour actionner la tringlerie (18) afin de déplacer la trappe (12),
le système d'actionnement (16) comprenant en outre un levier extensible (28), le levier extensible (28) étant relié directement ou indirectement au niveau d'une première extrémité (280) à un organe de sortie (200) de l'actionneur, et relié directement ou indirectement au niveau d'une seconde extrémité opposée (282) à la trappe (12),
l'ensemble prise de recharge (10) étant **caractérisé en ce que** le levier extensible (28) comprend un premier organe (30) relié de manière fixe à la première extrémité (280) ou à la seconde extrémité (282) du levier extensible (28), et un second organe (32) relié de manière fixe à l'extrémité opposée (282) du levier extensible (28), le premier organe (30) et le second organe (32) étant configurés pour s'éloigner l'un de l'autre lorsqu'une force est exercée sur le levier extensible (28), la force exercée tendant à séparer les deux extrémités (280, 282) du levier extensible (28) et ayant une intensité supérieure à une intensité spécifiée, l'intensité spécifiée étant inférieure à l'intensité d'une force susceptible d'endommager le système d'actionnement (16).

2. Ensemble trappe de prise de recharge (10) selon la revendication 1, dans lequel le premier organe (30) et le second organe (32) sont couplés de manière amovible via une liaison par encliquetage.

3. Ensemble trappe de prise de recharge (10) selon la revendication 2, dans lequel le premier organe (30) comprend une portion de forme creuse (300) configurée pour recevoir un montant (320) faisant saillie du second organe (320), le montant (320) ayant une extrémité de liaison (322) configurée pour être couplée de manière amovible à une portion de verrouillage (302) du premier organe (30) via une liaison par encliquetage.

4. Ensemble trappe de prise de recharge (10) selon la revendication 3, dans lequel l'extrémité de liaison (322) du montant (320) a une portion fendue définissant deux éléments flexibles (324), chacun des éléments flexibles (324) portant une première rampe (326) et une seconde rampe (328), les rampes (326, 328) de chaque élément flexible (324) étant configurées pour permettre une liaison par encliquetage avec les premières rampes (304) et les secondes rampes (306) correspondantes de la portion de verrouillage (302) du premier organe (30).

5. Ensemble trappe de prise de recharge (10) selon la revendication 3 ou 4, dans lequel la portion de forme creuse (300) et le montant (320) sont configurés pour permettre à au moins une partie du montant (320), par exemple au moins l'extrémité de liaison (322), de rester dans la portion de forme creuse (300) lorsque le levier extensible (28) est dans une configuration d'extension maximale.

6. Ensemble trappe de prise de recharge (10) selon la revendication 5, dans lequel la longueur (L2) de la portion du montant (320) qui est logée dans le premier organe (30) lorsque le premier organe (30) et le second organe (32) sont couplés ensemble est supérieure à la longueur maximale du déplacement relatif entre les deux organes (30, 32) lorsque la liaison entre les premier et second organes (30, 32) est libérée et le levier extensible (28) se déplace d'une configuration non étendue à une configuration d'extension maximale.

7. Ensemble trappe de prise de recharge (10) selon la revendication 1, dans lequel le premier organe (30) comprend une partie de forme creuse (310), et le second organe (32) comprend une partie de forme creuse (330) configurée pour recevoir en coulissement la partie de forme creuse (310) du premier organe (30), les premier et second organes (30, 32) étant configurés pour recevoir, dans l'enceinte délimitée par les deux parties de forme creuse (310, 330), un dispositif de sollicitation élastique (34), le dispositif de sollicitation élastique (34) étant configuré pour solliciter les deux organes (30, 32) l'un vers l'autre.

8. Ensemble trappe de prise de recharge (10) selon la revendication 7, dans lequel le premier organe (30) et le second organe comprennent chacun une partie de forme creuse (310, 330) qui est en forme de tube, la partie de forme creuse (330) du second organe (32) ayant un diamètre interne qui est supérieur à un diamètre externe de la partie de forme creuse (310) du premier organe (30).

9. Ensemble trappe de prise de recharge (10) selon la revendication 7 ou 8, dans lequel les parties de forme creuse (310, 330) ont une longueur permettant au dispositif de sollicitation élastique (34) de rester entièrement logé dans l'enceinte délimitée par les parties de forme creuse (310, 330) lorsque le levier extensible (28) est dans une configuration d'extension maximale.

10. Ensemble trappe de prise de recharge (10) selon l'une quelconque des revendications 7 à 9, dans lequel le dispositif de sollicitation élastique (34) est un ressort, par exemple un ressort d'extension hélicoïdal (34).

11. Ensemble trappe de prise de recharge (10) selon la revendication 10, dans lequel la raideur de ressort du ressort (34) est telle que l'extension maximale du levier extensible (28) est obtenue lorsque le ressort (34) est soumis à une force dont l'intensité est inférieure à l'intensité d'une force susceptible d'endommager le système d'actionnement (16).

12. Ensemble trappe de prise de recharge (10) selon l'une quelconque des revendications précédentes, dans lequel l'actionneur (20) est un actionneur rotatif électrique.

13. Ensemble trappe de prise de recharge (10) selon l'une quelconque des revendications précédentes, dans lequel la tringlerie (18) comprend un premier levier (22) et un second levier (24), chacun des premier et second leviers étant articulé au niveau d'une extrémité (220, 240) au support et étant articulé au niveau d'une extrémité opposée (222, 242) à la trappe (12), les premier et second leviers (22, 24) étant configurés comme un mécanisme à parallélogramme.

14. Ensemble prise de recharge (10) selon la revendication 13, dans lequel le levier extensible (28) est couplé en rotation au premier levier (22) au niveau de la première extrémité (280) et est couplé en rotation au niveau de la seconde extrémité (282) à un premier levier d'actionnement (26), le premier levier d'actionnement (26) étant couplé de manière fixe à l'organe de sortie (200) de l'actionneur (20).

15. Véhicule (1) comprenant une prise de recharge montée sur un support et un ensemble trappe de prise de recharge (10) selon l'une quelconque des revendications précédentes.
